# EUROPEAN PATENT APPLICATION

(11) **EP 2 023 423 A2**
(43) Date of publication of application: **11.02.2009**
(21) Application number: 08013771.4
(22) Date of filing: 31.07.2008
(51) Int. Cl.: H01M 2/00

(54) **Non-prismatic electrochemical cell**

(30) Priority: 31.07.2007 US 952879 P
(71) Applicant: Greatbatch Ltd., Clarence, NY 14031 (US)
(72) Inventor: Freitag, Gary, East Aurora, New York 14052 (US); Wutz, David, Lockport, New York 14094 (US)
(74) Representative: Koepe, Gerd L.

(57) **Abstract**

An electrochemical cell with a non-prismatic casing and solid cathode is the present invention. The casing has a front side wall, a back side wall, a right side wall, a left side wall, a top wall, and bottom wall. The non-prismatic function is obtained by having the right and left side walls having tapered widths - wide near the top wall and narrower near the bottom wall. A solid anode having a uniform height is positioned against the front side wall and/or the back side wall. A solid cathode is surrounded by a separator and has at least a tapered height to correspond to the tapered right and left side walls wherein the anode's front side is parallel with the front major sidewall and the anode's back side is parallel with the back major sidewall. This non-prismatic design decreases the formation of voids and maximizes the amount of cathode in non-prismatic casing designs to obtain the optimal electrochemical capabilities.

## Description

### CROSS-REFERENCE TO RELATED APPLICATION

This application claims priority from U.S. Provisional Application Serial No. 60/952,879, filed July 31, 2007.

### BACKGROUND OF THE INVENTION

### 1. Field of the Invention

The present invention is directed to electrochemical cells for generating electrical energy by chemical reaction. More specifically, the invention relates to an electrochemical cell housed in a generally wedge-shaped casing. Such a casing shape contrasts with those where the active components are housed in either prismatic or cylindrical casings, which are well known. The wedge-shaped casing is useful in applications requiring non-traditional shapes.

### 2. Prior Art

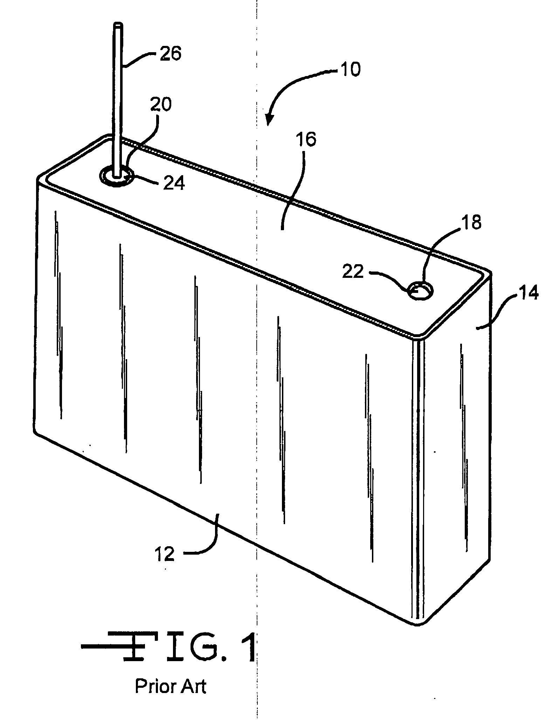

Recent developments in small electronic devices having various shape and size requirements necessitate comparably small-sized electrochemical cells that are easily manufactured and used in such devices. Preferably, these types of cells are of a high energy density, such as is provided by those predicated on a lithium chemistry. One widely used configuration is to house a high energy density lithium cell in a prismatic-shaped casing 10. An example is shown in FIG. 1. Whether the cell is of a primary or a secondary chemistry is not important. The casing 10 includes a planar front sidewall 12 opposite a planar back sidewall (not shown), both of which extend to and meet with a right end wall 14 and an opposed left end wall (not shown). The front and back sidewalls and the right and left end walls extend to and meet with a planar bottom wall (not shown) in a unitary construction to form a deep drawn container having an upper opening. The open ended container has a generally rectangular shape with the front and back sidewalls being parallel to each other and the right and left end walls being parallel to each other as well. An alternate construction is to provide individual plates which are connected together as sidewalls and end walls to form the open ended container.

In any event, the open end of the container is closed by a generally planar lid 16. The lid 16 has a rectangular shape and is welded about its periphery to the upper edges of the respective sidewalls and end walls. The lid includes a fill opening 18 and a terminal pin opening 20. The fill opening 18 is a port for providing an electrolyte into the casing after an electrochemical couple is housed therein. The fill port is closed by a closure member 22, such as a ball, sealed therein.

The terminal pin opening 20 supports a glass-to-metal seal comprising a ring of insulative glass 24 surrounding a terminal pin 26 having its interior end (not shown) connected to one of the anode and cathode housed inside the casing 10. That way, the terminal pin 26 serves as one of the cell leads. The casing 10, insulated from the terminal pin 26 by the glass-to-metal seal 24, serves as the lead for the other electrode.

While the prismatic shaped casing 10 is widely used for a variety of power source applications, there exists a need for cells that are of different shapes, such as those having a wedge shape in cross-section.

In U.S. Patent No. 6,267,790, Daroux et al. wrote, "[w]hile metal . . . containers are sturdy and volume efficient, they are somewhat shape restrictive. Typically, metal . . . containers are most suitable and cost effective when traditional cylindrical shapes (especially for metal enclosures) or rectangular shapes are required. However, when a specific application or product requires a battery having an unusual shape, such as an extremely thin battery or a non-planar or non-prismatic battery, the assembly of a battery in an unusually shaped metal . . . enclosure becomes more difficult."

Alternative shapes for cell casings are disclosed in U.S. Patent Nos. 5,958,088 to Vu et al., 7,074,520 to Probst et al. and 6,831,827 to Zayatz, the latter two being commonly assigned. Zayatz discloses that an electrochemical cell can be housed in a cylindrical casing.

The Vu et al. patent discloses a prismatic casing having partially contoured sidewalls. The casing includes opposed major side walls, one having a concave arc while the other has an opposed convex arc. The electrodes are disposed within the casing and deflected in a spring like manner to follow the arcs of the opposed sidewalls. That way, the casing maintains a positive pressure against the cell electrodes.

The Probst et al. patent discloses an electrochemical cell housed in a casing of mating clamshell portions. The first clamshell portion has a first major sidewall extending to and meeting with a first surrounding sidewall and the second clamshell portion has a second major sidewall extending to and meeting with a second surrounding sidewall. The first and second clamshells are mated to each other with a first outer edge of the first surrounding sidewall facing the second major sidewall and a second outer edge of the second surrounding sidewall facing the first major sidewall. At least a portion of the first surrounding sidewall overlaps a portion of the second surrounding sidewall. The casing is then provided as a sealed enclosure with the first outer edge hermetically secured to the second surrounding sidewall. The first and second major sidewalls deflect in a similar direction.

A common feature in both a standard prismatic-shaped casing and the alternative casing shapes discussed above in the Vu et al., Probst et al. and Zayatz patents is that the distances between opposite sidewalls and end walls are equidistant. Equidistant separation between opposed casing walls, even when curved or cylindrical, is not always desirable for all electrochemical cell applications.

The previously discussed Probst et al. patent also describes a cell casing in which the opposed major sidewalls, even though they are curved, are not equidistant. In this patent, even though the back sidewall has a greater curvature than the front sidewall, the sidewalls curve in a similar direction. That type of casing construction is also not always desirable.

In that respect, the present invention provides a casing having a wedge-shape in which at least two directly opposed sidewalls angle away from each other. The term "opposed sidewalls" means a pair of sidewalls diametrically opposed to each other.

### SUMMARY OF THE INVENTION

Accordingly, the present invention is directed to an electrochemical cell of either a primary or a secondary, rechargeable chemistry housed in a generally wedge-shaped casing. The casing has a fronts sidewall, a back sidewall, a right end wall and a left end wall, all of them extending from a bottom wall to an open end closed by a lid. The wedge-shaped form factor is provided by the opposed right and left end walls having tapered widths. That is, the right and left end walls are wider near the top lid and narrower near the bottom wall. The spaced apart front and back sidewalls extending to and meeting with the opposed right and left end walls can either be planar or at least partly radiused to have a convex shape. In a case negative design, two anode portions are positioned against the respective front and back sidewalls. A solid cathode enveloped in a separator is located intermediate the front and back anode portions and has a wedge shape characterized by a tapered width that generally corresponds to the taper of the right and left end walls. Preferably, the front face of the front anode portion is parallel with the front major sidewall and the back face of the back anode portion is parallel with the back major sidewall.

The present non-prismatic or wedge-shaped casing designs are particularly well suited for modern tools and devices requiring a self container power source provided with a "V-shaped" receptacle for the power source.

### BRIEF DESCRIPTION OF THE DRAWINGS

FIG. 1 is a perspective view of a cell 10 comprising a conventional prismatic casing.
FIG. 2 is a perspective view of one embodiment of a wedge shaped casing 100 according to the present invention.
FIG. 3 is a cross-sectional view taken along the line 3-3 of FIG. 2.
FIG. 4 is a cross-sectional view taken along the line 4-4 of FIG. 2.
FIG. 5 is another embodiment of a wedge shaped casing 200 according to the present invention.
FIG. 6 is a cross-sectional view taken along the line 6-6 of FIG. 5.
FIG. 7 is a cross-sectional view taken along the line 7-7 of FIG. 5.
FIG. 8 is another embodiment of a wedge shaped casing 300 according to the present invention.
FIG. 9 is another embodiment of a wedge shaped casing 400 according to the present invention.
FIG. 10 is a cross-sectional view taken along the line 10-10 of FIG. 9.

### DETAILED DESCRIPTION OF THE PREFERRED EMBODIMENTS

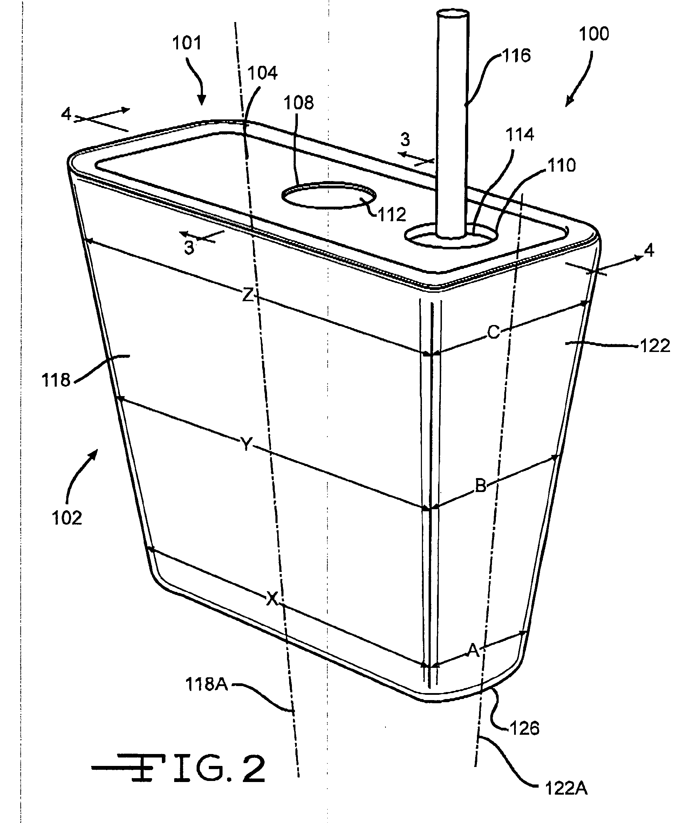

Turning now to the drawings, FIGs. 2 to 4 illustrate one embodiment of an electrochemical cell 100 housed in a wedge-shaped casing 101 according to the present invention. Prior to describing the casing construction in detail, it should be understood that many different chemistries can be housed in the wedge-shaped casing. This includes either an alkali metal/solid cathode or alkali metal/oxyhalide chemistry of both solid cathode and liquid electrolyte types. In the primary solid cathode type, for example a lithium-solid cathode cell, a solid cathode active material such as silver vanadium oxide or copper silver vanadium oxide, is contained within the casing and surrounded by a separator, such as of a polypropylene fabric or cloth. Lithium is the anode active material.

The casing 101 comprises a wedge-shaped open-ended container 102 closed by a header comprising a lid 104. The container 102 and lid 104 are preferably of a conductive material selected from the group of nickel, aluminum, stainless steel, mild steel, tantalum, titanium, and combinations thereof. More preferably, the container 102 and lid 104 are of the same conductive material. The lid 104 has a generally rectangular shape with radiused corners and is secured about its periphery to the upper edges of the respective sidewalls and end walls comprising the container 102 by weld 106. The lid 104 includes a fill opening 108 and a terminal pin opening 110. The fill opening 108 is a port for providing an electrolyte into the casing 101 to activate an electrochemical couple housed therein. The port is closed by a closure member 112, such as the ball or plug, sealed therein by weld 113.

The terminal pin opening 110 supports a glass-to-metal seal comprising a ring of insulative glass 114 surrounding a terminal pin 116 having its interior or proximal end 116A connected to one of the anode and cathode electrodes housed inside the casing 101. That way, the terminal pin 110 serves as one of the cell leads. The casing 101 insulated from the terminal pin 110 by the glass-to-metal seal 114 serves as the lead for the other electrode.

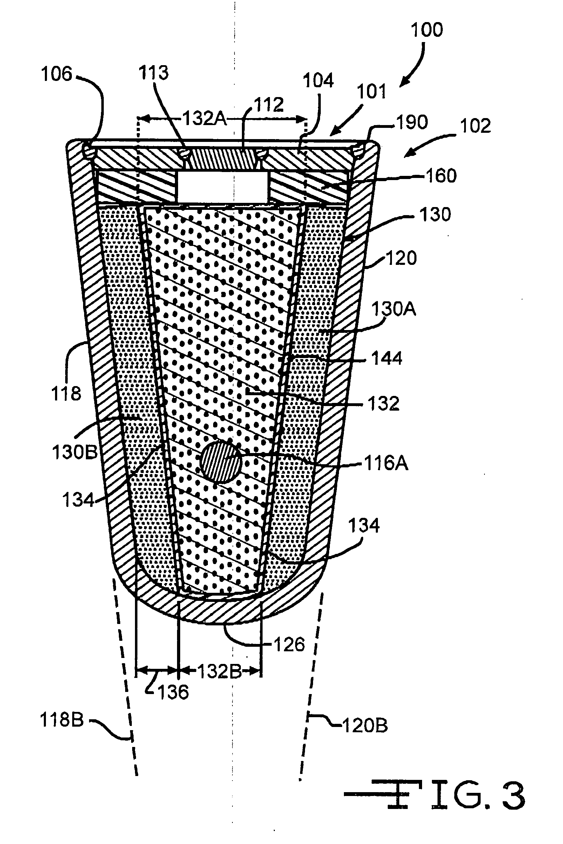

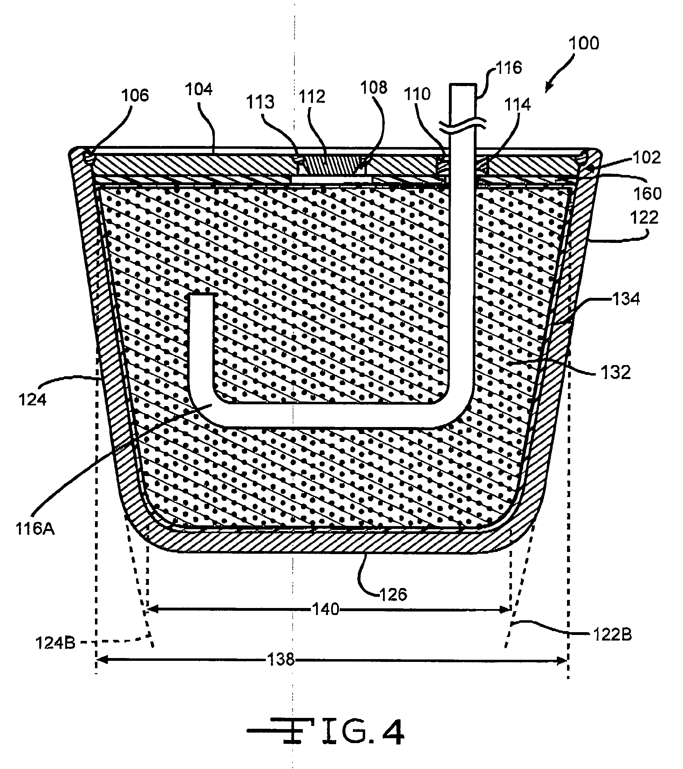

According to the present invention, the casing container 102 comprises front and back sidewalls 118, 120 extending to and meeting with right and left end walls 122 and 124, respectively. The wall pairs 118, 120 and 122, 124 are each in a non-parallel relationship with respect to each other. More particularly, the wedge-shaped open-ended container 102 of the casing 101 comprises a generally planar, wedge-shaped front sidewall 118 opposite a generally planar, wedge-shaped back sidewall 120 (FIG. 3), both of which extend to and meet with opposed generally planar wedge-shaped right and left end walls 122 and 124 (FIG. 4) at radiused or curved corners. The wedge-shaped front and back sidewalls 118, 120 and the wedge-shaped right and left end walls 122, 124 extend in a unitary construction from an arcuate or curved bottom wall 126 to an open end. This provides the container 102 as a deep-drawn member having a generally trapezoidal, wedge shape with the front and back sidewalls 118, 120 and the right and left end walls 122, 124 forming respective pairs of walls that angle upwardly and outwardly with respect to each other along their entire extent from the bottom wall 126 to the open container end. An alternate construction is to provide individual plates which are connected together as sidewalls and end walls to form the trapezoidal, wedge shaped casing.

In FIG. 2 this generally trapezoidal, wedge shape is shown by the distance between the edges of the end walls 122, 124 increasing moving in an upwardly direction from adjacent to the bottom wall 126 toward the open end. These non-uniform widths are shown by the relative distance "A" of end wall 122 adjacent to the bottom wall 126 being less than the distance "B" being less than the distance "C" adjacent to the open end of the container. Furthermore, that portion of the relative distances "A", "B" and "C" on either side of an imaginary bisecting line 122A are substantially equal. The opposed end wall 124 is similarly shaped. This angled relationship is shown by imaginary lines 122B and 124B projecting from the planar surface of the respective end walls 122, 124 meeting at a location below the bottom wall 126. Of course, if the end walls were parallel to each other, their projected imaginary lines would not meet each other.

Similarly, the widths of the respective sidewalls 118, 120 increase moving in an upwardly direction from adjacent to the bottom wall 126 toward the open end. This is shown by the relative distance "X" of sidewall 118 adjacent to the bottom wall 126 being less than the distance "Y" being less than the distance "Z" adjacent to the open end of the container. Furthermore, that portion of the relative distances "X", "Y" and "Z" on either side of an imaginary bisecting line 118A are substantially equal. The opposed sidewall 120 is similarly shaped. This angled relationship is shown by imaginary lines 118B and 120B projecting from the planar surface of the respective sidewalls 118, 120 meeting at a location below the bottom wall 126.

A significant characterizing feature of the casing 101 is that the front and back major sidewalls 118, 120 are significantly wider at their maximum width than are the right and left end walls 122, 124.

As shown in FIGs. 3 and 4, the thusly described casing 101 houses an electrode assembly comprising an anode 130 in electrical association with a cathode 132. The anode 130 and cathode 132 are physically segregated from contacting each other by an intermediate separator 134. The form of the anode 130 may vary, but preferably it comprises two portions 130A and 130B in the form of thin metal sheets or foils of anode active material, preferably lithium, pressed against the inner surface of the sidewalls 118, 120 serving as the anode terminal. The anode portions 130A, 130B can also comprise a perforated current collector (not shown), such as of nickel foil, having two sheets of anode active material, preferably lithium, pressed to its opposed major sides. That way, the lithium locks to itself through the current collector perforations. Titanium, titanium alloy, copper, tungsten and tantalum are also suitable materials for the anode current collector. The anode current collector is then integrally contacted by a weld to an inner surface of the wedge-shaped sidewalls 118, 120 of the casing 100 serving as the anode terminal.

The cathode 132 is of an electrically conductive material that serves as the other cell electrode. The cathode 132 is preferably of a solid cathode active material comprising a metal, a metal oxide, a mixed metal oxide and a metal sulfide, and combinations thereof. The cathode active material is formed by the chemical addition, reaction, or otherwise intimate contact of various metal oxides, metal sulfides or metal elements, preferably during thermal treatment, sol-gel formation, chemical vapor deposition or hydrothermal synthesis in mixed states. The active materials thereby produced contain metals, oxides and sulfides of Groups IB, IIB, IIIB, IVB, VB, VIB, VIIB and VIII, which include the noble metals and other oxide and sulfide compounds. A preferred cathode active material is a reaction product of at least silver and vanadium.

Preferably, the cathode 132 is a solid cathode active material such as silver vanadium oxide, carbon monofluoride (of, for example, a Li/CFₓ cell), or copper silver vanadium oxide, contained within the wedge-shaped casing 101 and physically segregated from the anode by the separator 134. Contemplated solid cathode active materials are not limited to silver vanadium oxide, carbon monofluoride, and copper silver vanadium oxide, but, can also be manganese dioxide, cobalt oxide, nickel oxide, copper oxide, copper sulfide, iron sulfide, iron disulfide, titanium disulfide, copper vanadium oxide, and mixtures thereof.

By way of example in an illustrative primary lithium cell, the cathode active material is a silver vanadium oxide material as described in U.S. Patent Nos. 4,310,609 and 4,391,729 to Liang et al., or copper silver vanadium oxide as described in U.S. Patent Nos. 5,472,810 and 5,516,340 to Takeuchi et al., all assigned to the assignee of the present invention and incorporated herein by reference.

In any event, the cathode active material is mixed with a conductive diluent and a binder material and the thusly formed active admixture is pressed into the desired shape. Typically, the cathode 132 is made from a mixture of 80 to 95 weight percent of a cathode active material, 1 to 10 weight percent of a conductive diluent and 3 to 10 weight percent of a binder. The binder is preferably a fluoro-resin powder such as polytetrafluoroethylene (PTFE), polyvinylidene fluoride (PVDF), polyethylene tetrafluoro ethylene (ETFE), polyamides, polyimides, and mixtures thereof. It is preferably used in a powdered form. Suitable conductive diluents include acetylene black, carbon black and/or graphite. Metals such as nickel, aluminum, titanium and stainless steel in powder form are also useful as conductive diluents when mixed with the above listed active materials.

The cathode active mixture is contacted to a suitable current collector selected from titanium, titanium alloy, copper, tungsten, tantalum, and nickel. Titanium is a preferred material; however, if the cathode active material is CFₓ, the titanium current collector preferably has a coating of a graphite material on at least the surface contacted therewith.

An important feature of the cathode 132 is that it is at an intermediate location between the anode sheet portions 130A, 130B and is shaped to match the taper of the wedge-shaped casing 101. The cathode 132 enveloped in the separator 134 has an upper width 132A at a position nearest the lid 104 that is greater than its lower width 132B nearest the bottom wall 126. Preferably, the taper of the cathode 132 matches that of the end walls 122, 124. On the other hand, the anode portions 130A, 130B have similar thicknesses 136 while their respective heights measured from adjacent to the bottom wall 126 to adjacent the lid 104 are equal or approximately equal to the height of the cathode 132. As shown in FIG. 4, the anode 130 and the cathode 132 have similar widths adjacent to the lid 104, as indicated by arrow 138, and adjacent to the bottom wall 126, as indicated by arrow 140. Providing the anode portions 130A, 130B having essentially the same thicknesses and height as each other with the cathode 132 having a shape emulating the wedge-shaped casing 101 of the present invention minimizes the void (inactive) volume and maximizes the amount of active materials in the cell 100 having a non-traditional shaped, i.e. one that is neither prismatic or cylindrical.

As previously discussed, the anode 130 is physically segregated or separated from the cathode 132 by the separator 134. The separator 134 is an electrically insulative material that is chemically unreactive with the anode and cathode active materials. The separator 134 is also chemically unreactive with and insoluble in the electrolyte. Additionally, the separator material has sufficient porosity to allow flow therethrough of the electrolyte during the electrochemical reactions of the cell. Illustrative separator materials comprise fabrics woven from fluoropolymeric fibers including polyvinylidine fluoride, polyethylene tetrafluoro ethylene, and polyethylenechlorotrifluoroethylene used either alone or laminated with a fluoropolymeric microporous film, non-woven glass, polypropylene, polyethylene, glass fiber materials, ceramics, a polytetrafluoroethylene membrane commercially available under the designation ZITEX (Chemplast Inc.), a polypropylene membrane commercially available under the designation CELGARD (Celanese Plastic Company, Inc.) and a membrane commercially available under the designation DEXIGLAS (C.H. Dexter, Div., Dexter Corp.).

A preferred separator construction comprises a non-woven polypropylene fabric and polypropylene membrane. Preferably the non-woven fabric faces the cathode and the membrane faces the anode. That way, the non-woven layer acts as a wicking material to more effectively wet the cathode and act as a barrier to puncture of the membrane from loose cathode active materials such as carbon particles (CFₓ).

An insulator 160 is positioned between the lid 104 and the electrode assembly comprising the anode 130 and the cathode 132. The insulator 160 is a non-conductive material that securely positions the anode and cathode in the proper positions within the casing to obtain the desired battery capabilities. The thickness of the insulator 160 is shown exaggerated for purposes of illustration and it has an opening that allows an electrolyte filled into the casing 101 to contact the electrode assembly.

In that respect, the electrochemical cell 100 further includes a nonaqueous, ionically conductive electrolyte that serves as a medium for migration of ions between the anode 130 and the cathode 132 during the electrochemical reactions of the cell. The electrochemical reactions at the electrodes involve conversion of ions in atomic or molecular forms that migrate from the anode 130 to the cathode 132. Thus, suitable nonaqueous electrolytes are substantially inert to the anode and cathode materials, and they exhibit those physical properties necessary for ionic transport, namely, low viscosity, low surface tension and wettability.

A suitable electrolyte has an inorganic, ionically conductive salt dissolved in a mixture of aprotic organic solvents comprising a low viscosity solvent and a high permittivity solvent. In the case of an anode comprising lithium, preferred lithium salts that are useful as a vehicle for transport of lithium ions from the anode 130 to the cathode 132 include LiPF₆, LiBF₄, LiAsF₆, LiSbF₆, LiClO₄, LiO₂, LiAlCl₄, LiGaCl₄, LiC(SO₂CF₃)₃, LiN(SO₂CF₃)₂, LiSCN, LiO₃SCF₃, LiC₆F₅SO₃, LiO₂CCF₃, LiSO₆F, LiB(C₆H₅)₄, LiCF₃SO₃, and mixtures thereof.

Low viscosity solvents include esters, linear and cyclic ethers and dialkyl carbonates such as tetrahydrofuran (THF), methyl acetate (MA), diglyme, trigylme, tetragylme, dimethyl carbonate (DMC), 1,2-dimethoxyethane (DME), diethyl carbonate (DEC), and mixtures thereof, and high permittivity solvents include cyclic carbonates, cyclic esters and cyclic amides such as propylene carbonate (PC), ethylene carbonate (EC), acetonitrile, dimethyl sulfoxide, dimethyl formamide, dimethyl acetamide, γ-valerolactone, γ-butyrolactone (GBL), N-methylpyrrolidinone (NMP), and mixtures thereof. In the present invention, a preferred anode is lithium metal and the preferred electrolyte is 1.0M to 1.4M LiBF₄ in γ-butyrolactone for a Li/CFₓ cell and a 1.0M to 1.2M LiAsF₆ or LiPF₆ in a 50:50, by volume, mixture of DME and PC.

In the preferred Li/SVO cell 100, the cathode current collector (if present) is of titanium, the terminal lead 116 is of molybdenum, the electrolyte is a 1.0M to 1.4M solution of LiAsF₆ or LiPF₆ in a 50:50 mixture of, by volume, 1,2-dimethoxyethane and propylene carbonate, the glass seal 114 is of TA-23 hermetic sealing glass, and closure 112 is of stainless steel. The lithium anode is preferable in sheet form contacted to both sides of a nickel foil current collector.

While a primary solid cathode type, for example a lithium-solid cathode cell, has been used as an exemplary chemistry for the purpose of describing the construction of the wedge-shaped casing 101 shown in FIGs. 2 to 4, the type of chemistry that can be contained therein should not be so limited. The cell 100 can also be of a liquid cathode/electrolyte or catholyte type cell, for example a lithium-oxyhalide cell where a liquid catholyte fills the casing interior and is in operative contact with the anode 130 and the cathode element 132 is a carbonaceous material serving as a current collector. A separator 134 is disposed between the anode 130 and the carbonaceous cathode 132. For a more detailed description of such a cell reference is made to U.S. Pat. No. 4,246,327 to Skarstad et al., which is assigned to the assignee of the present invention and incorporated herein by reference.

The cell can also be of a secondary, rechargeable chemistry where the anode 130 comprises an anode material capable of intercalating and de-intercalating the anode active material, such as the preferred lithium. A carbonaceous material comprising any of the various forms of carbon, e.g., coke, graphite, acetylene black, carbon black, glass carbon, meso-carbon microbeads (MCMB), and "hair carbon", which are capable of reversibly retaining the lithium species is preferred for the anode. "Hairy carbon" is a material described in U.S. Pat. No. 5,443,928 to Takeuchi et al., which is assigned to the assignee of the present invention and incorporated herein by reference. Graphite is another preferred material. Regardless of the form of the carbon, fibers of the carbonaceous material are particularly advantageous because they have excellent mechanical properties which permit them to be fabricated into rigid electrodes that are capable of withstanding degradation during repeated charge/discharge cycling. Moreover, the high surface area of carbon fibers allows for rapid charge/discharge rates.

Also in secondary systems, the cathode 132 preferably comprises a lithiated material that is stable in air and readily handled. Examples of such air-stable lithiated cathode active materials include oxides, sulfides, selenides, and tellurides of such metals as vanadium, titanium, chromium, copper, molybdenum, niobium, iron, nickel, cobalt and manganese. The more preferred oxides include LiNiO₂, LiMn₂O₄, LiCoO₂, LiCo_{0.92}Sn_{0.08}O₂ and LiCo₁₋ₓNiₓO₂.

A preferred electrolyte for a secondary cell is described in U.S. application Ser. No. 09/669,936, which is assigned to the assignee of the present invention and incorporated herein by reference.

As illustrated in FIGs. 3 and 4, a preferred form of the electrochemical cell 100 is a case-negative design. This means that the anode/cathode couple is inserted into the conductive metal casing 101 electrically connected to the anode 130 serving as the negative terminal. A preferred material for the casing container 102 is titanium although stainless steel, mild steel, nickel, nickel-plated mild steel and aluminum are also suitable. The casing header comprising the metallic lid 104 is of a material similar to that of the container 101 and has a sufficient number of openings to accommodate the glass-to-metal seal/terminal pin feedthrough for the cathode 130. An additional opening is provided for the electrolyte. The casing 101 is thereafter filled with the electrolyte solution described hereinabove and hermetically sealed such as by close-welding the stainless steel closure member 112 into the fill hole or port 108, but not limited thereto. The cell 100 can also be constructed in a case-positive design, as is well known by those skilled in the art.

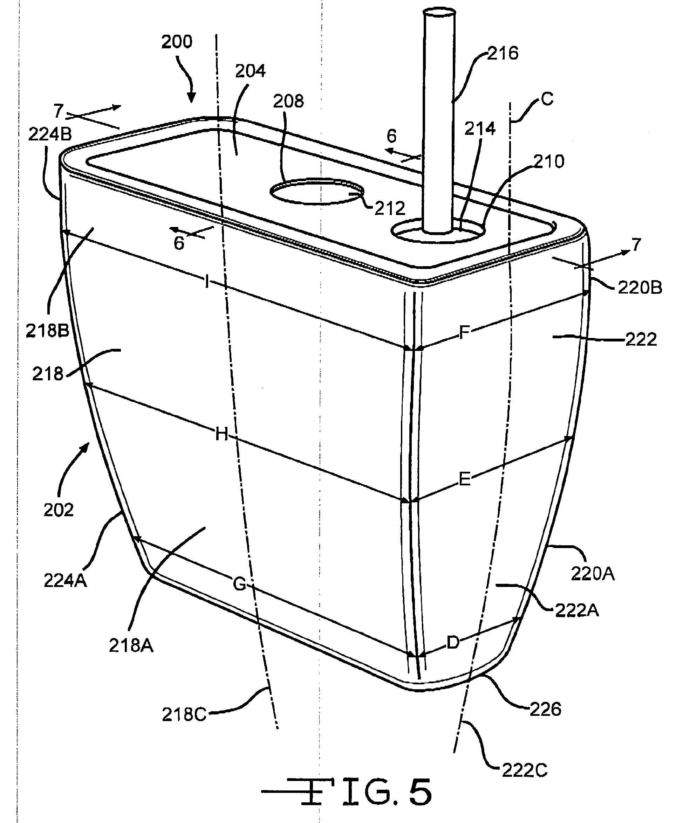

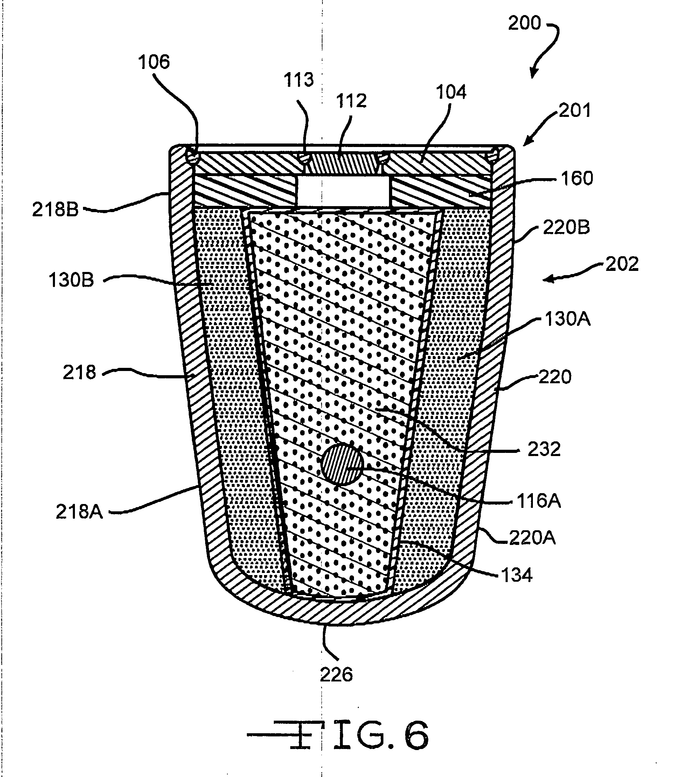

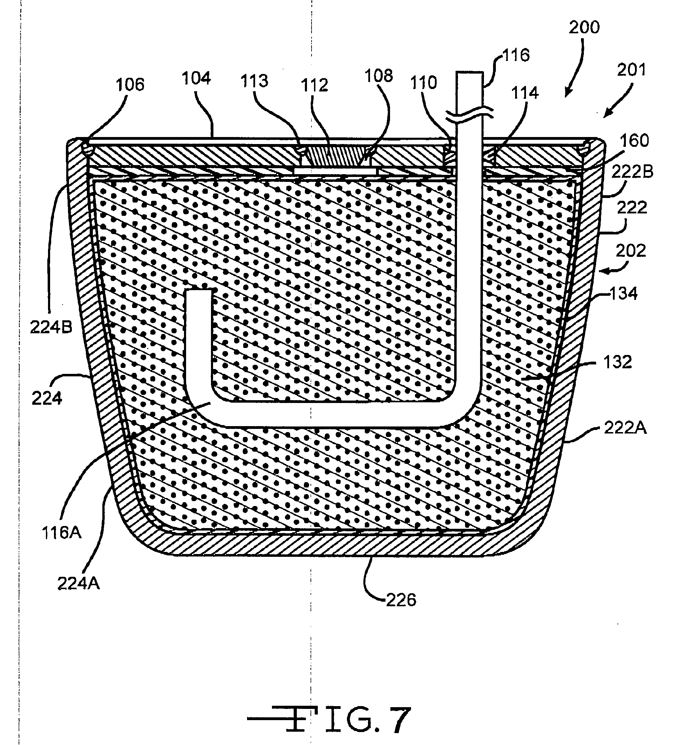

FIGs. 5 to 7 illustrate another embodiment of an electrochemical cell 200 comprising a casing 201 according to the present invention. The casing 201 comprises a container 202 closed by a header comprising the lid 204 shown in FIGs. 2 to 4. The casing container 202 comprises front and back sidewalls 218, 220 extending to and meeting with right and left end walls 222 and 224, respectively, at radiused or curved corners. At least some portions of the wall pairs 218, 220 and 222, 224 are in a non-parallel relationship with respect to each other. More particularly, the wedge-shaped open-ended container 202 of the casing 201 comprises a compound planar, wedge-shaped front sidewall 218 opposite a compound planar, wedge-shaped back sidewall 220 (FIG. 6), both of which extend to and meet with opposed compound planar, wedge-shaped right and left end walls 222 and 224 (FIG. 7). The wedge-shaped front and back sidewalls 218, 220 and the wedge-shaped right and left end walls 222, 224 extend in a unitary construction from an arcuate or curved bottom wall 226 to an open end. This provides the container 202 as a deep-drawn member having a generally wedge shape with the front and back sidewalls 218, 220 and the right and left end walls 222, 224 forming respective pairs of walls that angle upwardly and outwardly with respect to each other along at least apportion of their lengths extending from the bottom wall 226 to the open container end.

In FIG. 5 this wedge shape is shown by the relative distance "D" of end wall 222 adjacent to the bottom wall 226 being less than the distance "E" being substantially the same as the distance "F" adjacent to the open end of the container. The opposed end wall 224 is similarly shaped. Similarly, the width of the sidewall 218 is shown by the relative distance "G" adjacent to the bottom wall 226 being less than the distance "H" being substantially the same as the distance "I" adjacent to the open end of the container. The opposed sidewall 220 is similarly shaped.

A significant characterizing feature of the casing 201 is that the front and back major sidewalls 218, 220 are significantly wider at their maximum width than are the right and left end walls 222, 224.

In that respect, casing container 202 has wall pairs 218, 220 that comprise respective lower planar portions 218A, 220A that angle upwardly and outwardly with respect to each other and respective upper planar portions 218B, 220B that are substantially parallel to each other. The lower portions 218A, 220A account for the distances "G" being less that the distances "H" while the upper planar portions 218B and 220B account for the distances "H" being substantially the same as the distances "I". The transition from the lower portions 218A, 220A to the upper portions 218B, 220B is curved or radiused. Furthermore, that portion of the relative distances "G", "H" and "I" on either side of an imaginary bisecting line 218C are substantially equal.

In a like manner, the wall pairs 222, 224 comprise respective lower planar portions 222A, 224A and respective upper planar portions 222B, 224B. The lower portions 222A, 224A account for the distances "D" being less that the distances "E" while the upper planar portions 222B, 224B account for the distances "E" being substantially the same as the distances "F". The transition from the lower portions 222A, 224A to the upper portions 222B, 224B is curved or radiused. Furthermore, that portion of the relative distances "D", "E" and "F" on either side of an imaginary bisecting line 222C are substantially equal.

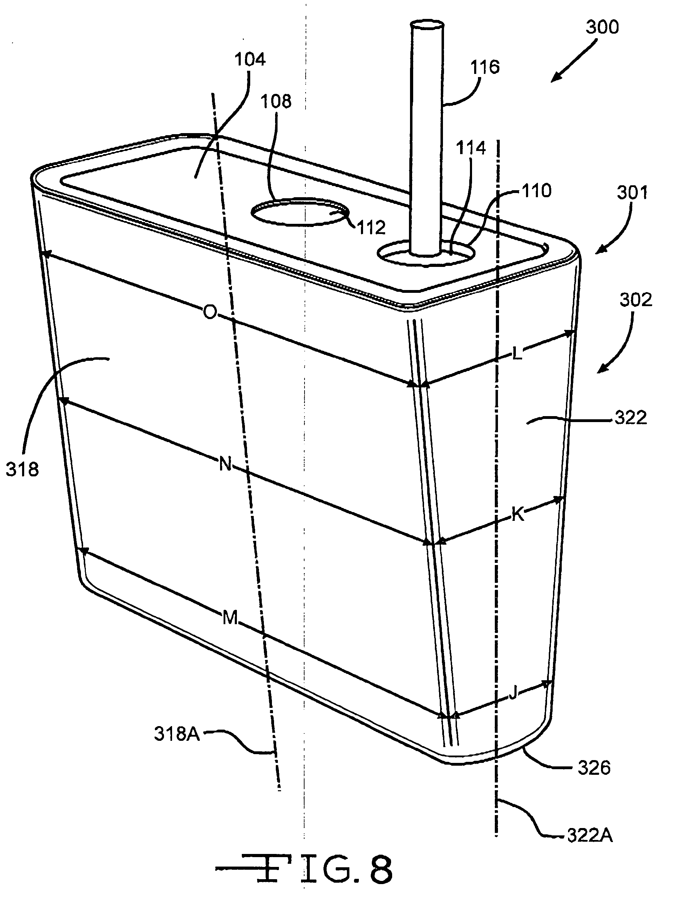

FIG. 8 illustrates another embodiment of an electrochemical cell 300 comprising a casing 301 according to the present invention. The casing 301 comprises a container 302 closed by a header comprising the lid 104 shown in FIGs. 2 to 4. The casing container 302 comprises front and back sidewalls 318, 320 extending to and meeting with right and left end walls 322 and 324, respectively, at radiused or curved corners. The wall pairs 318, 320 and 322, 324 are each in a non-parallel relationship with respect to each other. More particularly, the wedge-shaped open-ended container 302 of the casing 301 comprises a generally planar rectangular-shaped front sidewall 318 opposite a generally planar rectangular-shaped back sidewall 320, both of which extend to and meet with opposed generally planar wedge-shaped right and left end walls 322 and 324. The rectangular-shaped front and back sidewalls 318, 320 and the wedge-shaped right and left end walls 322, 324 extend in a unitary construction from an arcuate or curved bottom wall 326 to an open end. This provides the container 302 as a deep-drawn member having a generally wedge shape with the front and back sidewalls 318, 320 and the right and left end walls 322, 324 forming respective wall pairs with only the sidewalls 318, 320 angling upwardly and outwardly with respect to each other along their entire extent from the bottom wall 326 to the open container end. The end walls 322, 324 are in a substantially parallel relationship with respect to each other.

In FIG. 8 this wedge shape is shown by the relative distance "J" of end wall 322 adjacent to the bottom wall 326 being less than the distance "K" being less than the distance "L" adjacent to the open end of the container. Furthermore, that portion of the relative distances "J", "K" and "L" on either side of an imaginary bisecting line 322A are substantially equal. The opposed end wall 324 is similarly shaped.

In contrast, the widths of the respective sidewalls 318, 320 are shown by the relative distance "M" of sidewall 318 adjacent to the bottom wall 226 being substantially the same as the distance "N" being substantially the same as the distance "O" adjacent to the open end of the container. Furthermore, that portion of the relative distances "M", "N" and "O" on either side of an imaginary bisecting line 318A are substantially equal. The opposed sidewall 320 is similarly shaped.

A significant characterizing feature of the casing 301 is that the front and back major sidewalls 318, 320 are significantly wider at their maximum width than are the right left end walls 322, 324.

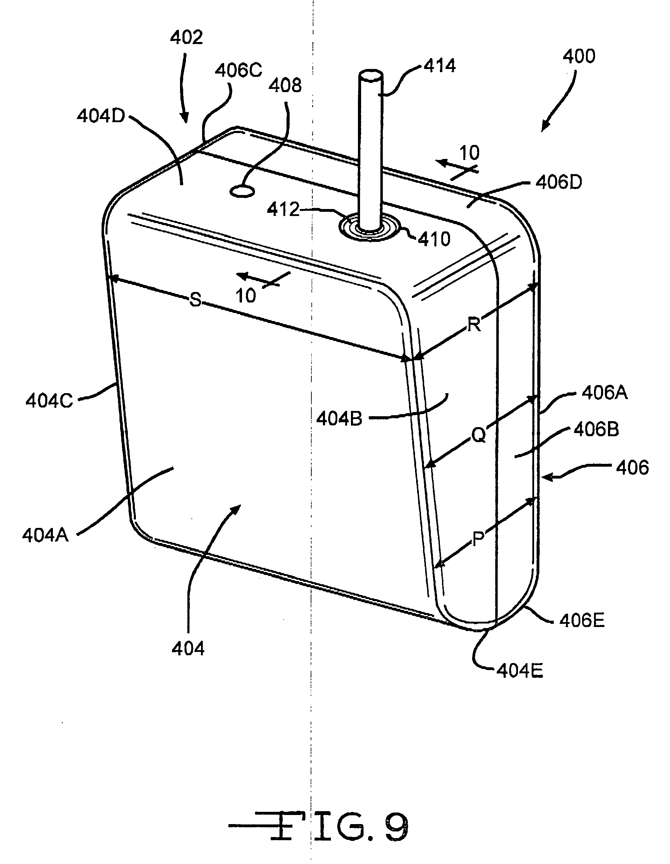

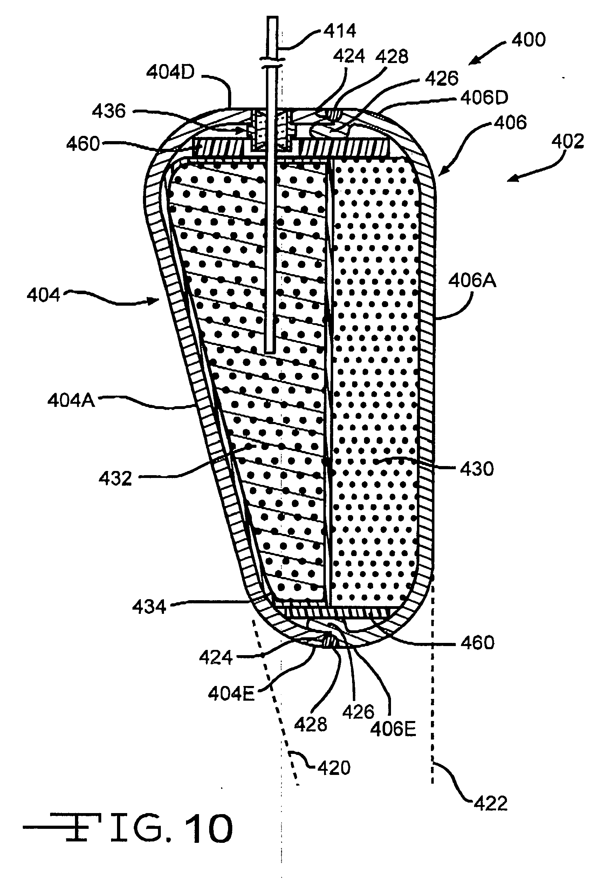

FIGs. 9 and 10 illustrate another embodiment of an electrochemical cell 400 housed in a casing 402 having a wedge-shape according to the present invention. The wedge-shaped casing 402 includes a first or front clamshell portion 404 and a second or back clamshell portion 406 mated or otherwise secured to each other. The front clamshell 404 comprises a front major face wall 404A having a uniform width extending from adjacent a bottom portion of the casing to a lid portion. The lid portion includes a fill opening closed by a plug 408 and the terminal pin opening 410 supporting the glass-to-metal seal 412 and the terminal pin 414. The surrounding sidewall of the first clamshell extending from the front face wall 404A includes a right tapered end wall portion 404B, a left tapered end wall portion 404C, the right and left end wall portions 404B, 404C meeting a lid portion 404D and an arcuate bottom wall portion 404E. In that respect, the wall portions 404B, 404C, 404D and 404E comprise the surrounding sidewall of the front clamshell 404 of the casing 402.

Likewise, the back clamshell 406 comprises a surrounding sidewall extending from the front face wall 406A. The surrounding sidewall includes a right end wall portion 406B, a left tapered end wall portion 406C, the right and left end wall portions 406B, 406C meeting a lid portion 406D and an arcuate bottom wall portion 406E. In that respect, the wall portions 406B, 406C, 406D and 406E comprise the surround sidewall of the front clamshell 406 of the casing 402.

A characterizing feature of the second clamshell portion 402 is that the wall portions 406B, 406C, 406D and 406E all have a similar height measured from where they meet the back face wall 406A to their distal edge. On the other hand, the height of the right and left end walls 404B, 404C of the first clamshell portion 404 having increasing heights measured from where they meet the front face wall 404A to their distal edges. This is illustrated by the combined widths of the right end wall portions 404B and 406B shown by,the relative distance "P" adjacent to the bottom wall portion 404E, 406E being less than their combined widths at intermediate location "Q" being less that their combined widths "R" adjacent to the lid portions 404D and 406D. The opposed left end wall portions 404C and 406C are similarly shaped.

The non-right angling of front face wall 404A and the vertical orientation of the back face wall 406A are confirmed by comparing the imaginary line 420 projecting from the plane of front face wall 404A to the imaginary line 422 projecting from the back face wall 406A. These lines 420 and 422 intersect along the vertical path of the back face wall 406A.

The clam shells may be butted together before they are sealed. This means that instead of the sidewall of one of the clamshells 404 or 406 being able to be partially housed or covered by the sidewall of the other clamshell, the sidewalls are of equal lengths and abut each other. The butted edges are sealed together such as by welding to form a hermetic enclosure.

In one embodiment, the front clamshell 404 has a front edge 424 and the back clamshell 406 has a back edge 426. The front edge 424 is relatively straight while the back edge 426 is a partial chicane shape (S-shaped) that receives the front edge 424. The respective front and back edges 424, 426 of the front and back clam shells 404, 406 are then secured to each other at hermetic seal 428. Other hermetic seals for mating clamshells are described in commonly assigned U.S. Patent No. 7,074,520 to Probst et al.

It is also within the scope of the present invention that instead of the casing shape shown in FIGs. 9 and 10 being provided by mating clamshell portions, this wedge-shape can be provided by a casing of the type described with respect to cells 100, 200 and 300. That is cells are housed in casing comprising a container closed by a lid, but having the shape shown with respect to cell 400. The seam between the clamshell portions would delineate one pair of major sidewalls or pair of end walls having one of the walls being in a vertical orientation while the other wall of the pair was in a angled relationship therewith. The included angle is acute.

The electrode assembly housed inside the casing 402 includes an anode 430 positioned against the interior surface of the back clamshell 404 and a cathode 432 positioned against the front clamshell 404. A separator 434 completely envelopes the cathode 432 and maintains physical separation between the anode and cathode while providing for ionic flow therethrough. The cathode 432 is connected to the terminal pin 414 serving as the positive terminal electrically insulated from the casing by a glass-to-metal seal 436. The anode 430 is in direct contact with the casing 402 serving as the negative terminal in the case negative cell design. Alternatively, the anode can de provided in two portions on opposite side of an intermediate cathode in a similar manner as the electrode assembly described with respect to the cell 100 shown in FIGs. 2 to 4. An insulator 460, preferably of a polymeric material, is provided as a ring-shaped member at an intermediate location between the weld 428 sealing the clamshell portion 404 and 406 together and the electrode assembly comprising the anode 430 and the cathode 432. The insulator 460 is for the purpose of preventing heat generated during the welding process from damaging the anode, cathode and separator 434.

Thus, various casing shapes and configurations have been shown and described having a "wedge-shape". The wedge=shape is characterized by at least one of the casing sidewalls being in a non-parallel relationship with a diametrically opposed sidewall. In some designs, both opposed sidewalls are in an angled alignment with respect to an imaginary vertical axis. In any event, such casing shapes are particularly useful where the cell is received in a "V-shaped" receptacle as may be demanded by modern tools and devices requiring a self container power source.

It is appreciated that various modifications to the present inventive concepts described herein may be apparent to those of ordinary skill in the art without departing from the spirit and scope of the present invention as defined by the herein appended claims.

In accordance with the invention, the electrochemical cell comprises:
a) a casing comprising a front major sidewall, a back major sidewall, a right end wall and a left end wall, the front and back sidewalls and the right and left end walls extending from a bottom wall to an opening closed by a lid, wherein at least the left end wall has a first width adjacent to the lid and a second width, less than the first width, adjacent to the bottom wall, and the right end wall has a third width adjacent to the lid and a fourth width, less than the third width, adjacent to the bottom wall;
b) an anode and a cathode housed inside the casing in electrochemical association with each other having a separator disposed therebetween; and
c) an electrolyte provided in the casing to activate the anode and the cathode.

In accordance with a preferred embodiment of the electrochemical cell of the invention, the right and left end walls are parallel to each other.

In accordance with another preferred embodiment of the electrochemical cell of the invention, the front and back major sidewalls are significantly wider at their maximum width than are the right and left end walls.

In accordance with another preferred embodiment of the electrochemical cell of the invention, the first and third widths are the same.

In accordance with another preferred embodiment of the electrochemical cell of the invention, the second and fourth widths are the same.

In accordance with another preferred embodiment of the electrochemical cell of the invention, the front major sidewall has a fifth width near the lid and a sixth width less than the fifth width adjacent to the bottom wall, and the back major sidewall has a seventh width adjacent to the lid and a eighth width less than the seventh width adjacent to the bottom wall.

In accordance with another preferred embodiment of the electrochemical cell of the invention, the fifth and seventh widths are the same.

In accordance with another preferred embodiment of the electrochemical cell of the invention, the sixth width and the eighth width are the same.

In accordance with another preferred embodiment of the electrochemical cell of the invention, the front major sidewall has a fifth width near the lid, an intermediate sixth width less than the fifth width, and a seventh width less than the fifth and sixth widths adjacent to the bottom wall, and the back major sidewall has an eighth width adjacent to the lid, an intermediate ninth width less than the eight width, and a tenth width less than both the eighth and ninth widths, adjacent to the bottom wall.

In accordance with another preferred embodiment of the electrochemical cell of the invention, the fifth and sixth widths of the front major sidewall are substantially the same.

In accordance with another preferred embodiment of the electrochemical cell of the invention, the eighth and ninth widths of the back major sidewall are substantially the same.

In accordance with another preferred embodiment of the electrochemical cell of the invention, the right end wall has a fifth width near the lid, an intermediate sixth width less than the fifth width, and a seventh width less than the fifth and sixth widths adjacent to the bottom wall, and the left end wall has an eighth width adjacent to the lid, an intermediate ninth width less than the eight width, and a tenth width less than both the eighth and ninth widths, adjacent to the bottom wall.

In accordance with another preferred embodiment of the electrochemical cell of the invention, the fifth and sixth widths of the front major sidewall are substantially the same.

In accordance with another preferred embodiment of the electrochemical cell of the invention, the eighth and ninth widths of the back major sidewall are substantially the same.

In accordance with another preferred embodiment of the electrochemical cell of the invention, the pairs of the fifth and eighth widths, the sixth and ninth widths and the seventh and tenth widths are substantially the same.

In accordance with another preferred embodiment of the electrochemical cell of the invention, the front major sidewall has a first uniform width and the back major sidewall has a second uniform width, both extending from where they meet the bottom wall to a lid.

In accordance with another preferred embodiment of the electrochemical cell of the invention, the anode comprises a first anode portion and a second anode portion housed inside the casing with the cathode intermediate the first and second anode portions.

In accordance with another preferred embodiment of the electrochemical cell of the invention, the cathode has a wedge-shape substantially matching that of the right and left end walls.

In accordance with another preferred embodiment of the electrochemical cell of the invention, the front major sidewall resides in a plane that is not parallel to a plane of the back major sidewall, but in an angled relationship therewith.

In accordance with another preferred embodiment of the electrochemical cell of the invention, the front major sidewall, the back major sidewall, the right end wall, and the left end wall extend from the bottom wall and connect to each other at radiused corners in a unitary construction.

In accordance with another preferred embodiment of the invention, the electrochemical cell comprises the features that
a) the front major sidewall along with a front portion of the bottom wall, a front portion of the right end wall, a front portion of the left end wall, and a front portion of the top wall form a front clamshell;
b) the back major sidewall along with a back portion of the bottom wall, a back portion of the right end wall, a back portion of the left end wall, and a back portion of the top wall form a back clamshell;
c) wherein the front and back clamshells are secured to each other to form the casing.

In accordance with another preferred embodiment of the electrochemical cell of the invention, the front portion of the right end wall and the front portion of the left end wall increase in width measured from the front major sidewall to an edge thereof as they extend from the front portion of the bottom wall to the front portion of the top wall of the front clamshell.

In accordance with another preferred embodiment of the electrochemical cell of the invention, the back portion of the bottom wall, the back portion of the right end wall, the back portion of the left end wall, and the back portion of the top wall forming the back clamshell are of a similar width extending from the back major sidewall to an edge therefore.

According to the invention, another embodiment of the electrochemical cell comprises:
a) a casing comprising a front major sidewall, a back major sidewall, a right end wall and a left end wall, the front and back sidewalls and the right and left end walls extending from a bottom wall to an opening closed by a lid, wherein at least the front major sidewall has a first width adjacent to the lid and a second width, less than the first width, adjacent to the bottom wall, and the back major sidewall has a third width adjacent to the lid and a fourth width, less than the third width, adjacent to the bottom wall;
b) an anode and a cathode housed inside the casing in electrochemical association with each other having a separator disposed therebetween; and
c) an electrolyte provided in the casing to activate the anode and the cathode.

In accordance with another preferred embodiment of the electrochemical cell of the invention, the front and back major sidewalls are significantly wider at their maximum width than are the right and left end walls.

In accordance with another preferred embodiment of the electrochemical cell of the invention, the first and third widths are the same.

In accordance with another preferred embodiment of the electrochemical cell of the invention, the second and fourth widths are the same.

In accordance with another preferred embodiment of the electrochemical cell of the invention, the right end wall has a first uniform width and the left end wall has a second uniform width, both extending from where they meet the bottom wall to a lid.

In accordance with another preferred embodiment of the electrochemical cell of the invention, the front and back major sidewalls are parallel to each other.

In accordance with another preferred embodiment of the electrochemical cell of the invention, the anode comprises a first anode portion and a second anode portion housed inside the casing with the cathode intermediate the first and second anode portions.

In accordance with another preferred embodiment of the electrochemical cell of the invention, the cathode has a wedge-shape substantially matching that of the right and left end walls.

In accordance with another preferred embodiment of the electrochemical cell of the invention, the front major sidewall resides in a plane that is not parallel to a plane of the back major sidewall, but in an angled relationship therewith.

In accordance with another preferred embodiment of the electrochemical cell of the invention, the front major sidewall, the back major sidewall, the right end wall, and the left end wall extend from the bottom wall and connect to each other at radiused corners in a unitary construction.

The invention also relates to a method for providing an electrochemical cell, said method comprising the steps of:
a) providing a casing comprising a container comprising a front sidewall, a back sidewall, a right end wall and a left end wall, the front and back sidewalls and the right and left end walls extending from a bottom wall to an opening closed by a lid wherein at least the left end wall has a first width adjacent to the lid and a second width, less than the first width, adjacent to the bottom wall, and the right end wall has a third width adjacent to the lid and a fourth width, less than the third width, adjacent to the bottom wall;
b) nesting an anode and a cathode with an intermediate separator disposed therebetween inside the casing container;
c) connecting the anode and the cathode to respective terminals;
d) hermetically sealing a lid to the open end of the casing container to thereby provide the casing;
e) activating the anode and the cathode with an electrolyte provided in the casing through a fill opening; and
f) sealing the fill opening.

In a preferred embodiment of the invention, the method includes the step of providing the right and left end walls being parallel to each other.

In another preferred embodiment of the invention, the method includes the step of providing the front and back major sidewalls being significantly wider at their maximum width than are the right and left end walls.

In another preferred embodiment of the invention, the method includes the step of providing the first and third widths being the same.

In another preferred embodiment of the invention, the method includes the step of providing the second and fourth widths being the same.

In another preferred embodiment of the invention, the method includes the step of providing the front major sidewall having a fifth width near the lid and a sixth width less than the fifth width adjacent to the bottom wall, and the back major sidewall having a seventh width adjacent to the lid and a eighth width less than the seventh width adjacent to the bottom wall.

In another preferred embodiment of the invention, the method includes the step of providing the fifth and seventh widths being the same.

In another preferred embodiment of the invention, the method includes the step of providing the sixth width and the eighth width being the same.

In another preferred embodiment of the invention, the method includes the step of providing the front major sidewall having a fifth width near the lid, an intermediate sixth width less than the fifth width, and a seventh width less than the fifth and sixth widths adjacent to the bottom wall, and the back major sidewall having an eighth width adjacent to the lid, an intermediate ninth width less than the eight width, and a tenth width less than both the eighth and ninth widths adjacent to the bottom wall.

In another preferred embodiment of the invention, the method includes the step of providing the fifth and sixth widths of the front major sidewall being substantially the same.

In another preferred embodiment of the invention, the method includes the step of providing the eighth and ninth widths of the back major sidewall being substantially the same.

In another preferred embodiment of the invention, the method includes the step of providing the pairs of the fifth and eighth widths, the sixth and ninth widths and the seventh and tenth widths being substantially the same.

In another preferred embodiment of the invention, the method includes the step of providing the front major sidewall having a first uniform width and the back major sidewall having a second uniform width, both extending from where they meet the bottom wall to a lid.

In another preferred embodiment of the invention, the method includes the step of providing the anode comprising a first anode portion and a second anode portion housed inside the casing with the cathode intermediate the first and second anode portions.

In another preferred embodiment of the invention, the method includes the step of providing the cathode having a wedge-shape substantially matching that of the right and left end walls.

In another preferred embodiment of the invention, the method includes the step of providing:
a) the front major sidewall along with a front portion of the bottom wall, a front portion of the right end wall, a front portion of the left end wall, and a front portion of the top wall forming a first clamshell;
b) the back major sidewall along with a back portion of the bottom wall, a back portion of the right end wall, a back portion of the left end wall, and a back portion of the top wall forming a back clamshell; and
c) securing the front and back clamshells together to form the casing.

## Claims

1. An electrochemical cell (100), which comprises:
a) a casing (101) comprising a front major sidewall (118), a back major sidewall (120), a right end wall (122) and a left end wall (124), the front and back sidewalls (118, 120) and the right and left end walls (122, 124) extending from a bottom wall (126) to an opening closed by a lid (104), wherein at least the left end wall (124) has a first width adjacent to the lid (104) and a second width, less than the first width, adjacent to the bottom wall (126), and the right end wall (122) has a third width adjacent to the lid (104) and a fourth width, less than the third width, adjacent to the bottom wall (126);
b) an anode (130) and a cathode (132) housed inside the casing (101) in electrochemical association with each other having a separator (134) disposed therebetween; and
c) an electrolyte provided in the casing (101) to activate the anode (130) and the cathode (132).

2. The electrochemical cell (100) of claim 1, wherein the right and left end walls (122, 124) are parallel to each other; and/or wherein the front and back major sidewalls (118, 120) are significantly wider at their maximum width than are the right and left end walls (122, 124).

3. The electrochemical cell (100) of claim 1, wherein the first and third widths are the same; and/or wherein the second and fourth widths are the same.

4. The electrochemical cell (100) of claim 1, wherein the front major sidewall (118) has a fifth width near the lid (104) and a sixth width less than the fifth width adjacent to the bottom wall (126), and the back major sidewall (120) has a seventh width adjacent to the lid (104) and a eighth width less than the seventh width adjacent to the bottom wall (126); preferably wherein the fifth and seventh widths are the same; and/or wherein the sixth width and the eighth width are the same.

5. The electrochemical cell (100) of claim 1, wherein the front major sidewall (118) has a fifth width near the lid (104), an intermediate sixth width less than the fifth width, and a seventh width less than the fifth and sixth widths adjacent to the bottom wall (126), and the back major sidewall (120) has an eighth width adjacent to the lid (104), an intermediate ninth width less than the eight width, and a tenth width less than both the eighth and ninth widths, adjacent to the bottom wall (126); preferably wherein the fifth and sixth widths of the front major sidewall (118) are substantially the same; and/or wherein the eighth and ninth widths of the back major sidewall (120) are substantially the same.

6. The electrochemical cell (100) of claim 1, wherein the right end wall (122) has a fifth width near the lid (104), an intermediate sixth width less than the fifth width, and a seventh width less than the fifth and sixth widths adjacent to the bottom wall (126), and the left end wall (124) has an eighth width adjacent to the lid (104), an intermediate ninth width less than the eight width, and a tenth width less than both the eighth and ninth widths, adjacent to the bottom wall (126); preferably wherein the fifth and sixth widths of the front major sidewall (118) are substantially the same; and/or wherein the eighth and ninth widths of the back major sidewall (120) are substantially the same.

7. The electrochemical cell (100) of claim 1, wherein the pairs of the fifth and eighth widths, the sixth and ninth widths and the seventh and tenth widths are substantially the same.

8. The electrochemical cell (100) of claim 1, wherein the front major sidewall (118) has a first uniform width and the back major sidewall (120) has a second uniform width, both extending from where they meet the bottom wall (126) to a lid (104).

9. The electrochemical cell (100) of claim 1, wherein the anode (130) comprises a first anode portion (130 A) and a second anode portion (130 B) housed inside the casing (101) with the cathode (132) being positioned intermediate the first and second anode portions (130 A, 130 B); and/or wherein the cathode (132) has a wedge-shape substantially matching that of the right and left end walls (122, 124).

10. The electrochemical cell (100) of claim 1, wherein the front major sidewall (118) resides in a plane that is not parallel to a plane of the back major sidewall (120), but in an angled relationship therewith.

11. The electrochemical cell (100) of claim 1, wherein the front major sidewall (118), the back major sidewall (120), the right end wall (122), and the left end wall (124) extend from the bottom wall (126) and connect to each other at radiused corners in a unitary construction.

12. The electrochemical cell (400) of claim 1 wherein:
a) the front major sidewall (404 A) along with a front portion of the bottom wall (404 E), a front portion of the right end wall (404 B), a front portion of the left end wall (404 C), and a front portion of the top wall (404 D) form a front clamshell (404);
b) the back major sidewall (406 A) along with a back portion of the bottom wall (406 E), a back portion of the right end wall (404 B), a back portion of the left end wall (404 C), and a back portion of the top wall (406 D) form a back clamshell (406); and
c) wherein the front and back clamshells (404, 406) are secured to each other to form the casing (402).

13. The electrochemical cell (400) of claim 12, wherein the front portion of the right end wall (404 B) and the front portion of the left end wall (404 C) increase in width measured from the front major sidewall to an edge thereof as they extend from the front portion of the bottom wall (404 E) to the front portion of the top wall (404 D) of the front clamshell (404); and/or wherein the back portion of the bottom wall (406 E), the back portion of the right end wall (406 B), the back portion of the left end wall (406 C), and the back portion of the top wall (406 D) forming the back clamshell (406) are of a similar width extending from the back major sidewall (406 A) to an edge thereof.

14. An electrochemical cell (200), which comprises:
a) a casing (201) comprising a front major sidewall (218), a back major sidewall (220), a right end wall (222) and a left end wall (224), the front and back sidewalls (218, 220) and the right and left end walls (222, 224) extending from a bottom wall (226) to an opening closed by a lid (204), wherein at least the front major sidewall (218) has a first width adjacent to the lid (204) and a second width, less than the first width, adjacent to the bottom wall (226), and the back major sidewall (220) has a third width adjacent to the lid (204) and a fourth width, less than the third width, adjacent to the bottom wall (226);
b) an anode (130) and a cathode (132) housed inside the casing (201) in electrochemical association with each other having a separator (134) disposed therebetween; and
c) an electrolyte provided in the casing (201) to activate the anode (130) and the cathode (132).

15. The electrochemical cell (200) of claim 14, wherein the front and back major sidewalls (218, 220) are significantly wider at their maximum width than are the right and left end walls (222, 224).

16. The electrochemical cell (200) of claim 14, wherein the first and third widths are the same; and/or wherein the second and fourth widths are the same.

17. The electrochemical cell (200) of claim 14, wherein the right end wall (222) has a first uniform width and the left end wall (224) has a second uniform width, both extending from where they meet the bottom wall (226) to a lid (204).

18. The electrochemical cell (200) of claim 14, wherein the front and back major sidewalls (218, 220) are parallel to each other.

19. The electrochemical cell (200) of claim 14, wherein the anode (130) comprises a first anode portion (130 A) and a second anode portion (130 B) housed inside the casing (201) with the cathode (132) being positioned intermediate the first and second anode portions (130 A, 130 B); and/or wherein the cathode (132) has a wedge-shape substantially matching that of the right and left end walls (222, 224).

20. The electrochemical cell (200) of claim 14, wherein the front major sidewall (218) resides in a plane that is not parallel to a plane of the back major sidewall (220), but in an angled relationship therewith.

21. The electrochemical cell (200) of claim 14, wherein the front major sidewall (218), the back major sidewall (220), the right end wall (222), and the left end wall (224) extend from the bottom wall (226) and connect to each other at radiused corners in a unitary construction.

22. A method for providing an electrochemical cell (100, 200, 300), comprising the steps of:
a) providing a casing (101, 201, 301) comprising a container (102, 202, 302) comprising a front sidewall (118, 218, 318), a back sidewall (120, 220, 320), a right end wall (122, 222, 322) and a left end wall (124, 224, 324), the front and back sidewalls (118, 218, 318, 120, 220, 320) and the right and left end walls (122, 222, 322, 124, 224, 324) extending from a bottom wall (126, 226, 326) to an opening closed by a lid (104, 204) wherein at least the left end wall (124, 224, 324) has a first width adjacent to the lid (104, 204) and a second width, less than the first width, adjacent to the bottom wall (126, 226, 326), and the right end wall (122, 222, 322) has a third width adjacent to the lid (104, 204) and a fourth width, less than the third width, adjacent to the bottom wall (126, 226, 326);
b) nesting an anode (130) and a cathode (132) with an intermediate separator (134) disposed therebetween inside the casing container (102, 202, 302);
c) connecting the anode (130) and the cathode (132) to respective terminals;
d) hermetically sealing a lid (104, 204) to the open end of the casing container (102, 202, 302) to thereby provide the casing (101, 201, 301);
e) activating the anode (130) and the cathode (132) with an electrolyte provided in the casing (101, 201, 301) through a fill opening (108); and
f) sealing the fill opening (108).

23. The method of claim 22, including providing the right and left end walls (122, 222, 322, 124, 224, 324) being parallel to each other; and/or including providing the front and back major sidewalls (118, 120, 218, 220, 318, 320) being significantly wider at their maximum width than are the right and left end walls (122, 222, 322, 124, 224, 324).

24. The method of claim 22, including providing the first and third widths being the same; and/or including providing the second and fourth widths being the same.

25. The method of claim 22, including providing the front major sidewall (118, 218, 318) having a fifth width near the lid (104, 204) and a sixth width less than the fifth width adjacent to the bottom wall (126, 226, 326), and the back major sidewall (120, 220, 320) having a seventh width adjacent to the lid (104, 204) and a eighth width less than the seventh width adjacent to the bottom wall (126, 226, 326); preferably including providing the fifth and seventh widths being the same; and/or including providing the sixth width and the eighth width being the same.

26. The method of claim 22, including providing the front major sidewall (118, 218, 318) having a fifth width near the lid (104, 204), an intermediate sixth width less than the fifth width, and a seventh width less than the fifth and sixth widths adjacent to the bottom wall (126, 226, 326), and the back major sidewall (120, 220, 320) having an eighth width adjacent to the lid (104, 204), an intermediate ninth width less than the eight width, and a tenth width less than both the eighth and ninth widths adjacent to the bottom wall (126, 226, 326); preferably including providing the fifth and sixth widths of the front major sidewall (118, 218, 318) being substantially the same; and/or including providing the eighth and ninth widths of the back major sidewall (120, 220, 320) being substantially the same; more preferably including providing the pairs of the fifth and eighth widths, the sixth and ninth widths and the seventh and tenth widths being substantially the same.

27. The method of claim 22, including providing the front major sidewall (118, 218, 318) having a first uniform width and the back major sidewall (120, 220, 320) having a second uniform width, both extending from where they meet the bottom wall (126, 226, 326) to a lid (104, 204).

28. The method of claim 22, including providing the anode (130) comprising a first anode portion (130 A) and a second anode portion (130 B) housed inside the casing (101, 201, 301) with the cathode (132) intermediate the first and second anode portions (130A, 130 B); and/or including providing the cathode (132) having a wedge-shape substantially matching that of the right and left end walls (122, 222, 322, 124, 224, 324).

29. The method of claim 22, including providing:
a) the front major sidewall (404 A) along with a front portion of the bottom wall (404 E), a front portion of the right end wall (404 B), a front portion of the left end wall (404 C), and a front portion of the top wall (404 D) forming a first clamshell (404);
b) the back major sidewall (406 A) along with a back portion of the bottom wall (406 E), a back portion of the right end wall (406 B), a back portion of the left end wall (406 C), and a back portion of the top wall (406 D) forming a back clamshell (406); and
c) securing the front and back clamshells (404, 406) together to form the casing (402).
